(19) Europäisches Patentamt
European Patent Office
Office européen des brevets

(11) Veröffentlichungsnummer: **0 301 302 B1**

(12) **EUROPÄISCHE PATENTSCHRIFT**

(45) Veröffentlichungstag der Patentschrift: **19.11.92**

(51) Int. Cl.[5]: **C08J 9/00**, C08G 18/00

(21) Anmeldenummer: **88111081.1**

(22) Anmeldetag: **12.07.88**

# (54) Verfahren zur Herstellung von Polyurethanschäumen.

(30) Priorität: **25.07.87 DE 3724716**

(43) Veröffentlichungstag der Anmeldung:
**01.02.89 Patentblatt 89/05**

(45) Bekanntmachung des Hinweises auf die Patenterteilung:
**19.11.92 Patentblatt 92/47**

(84) Benannte Vertragsstaaten:
**BE DE FR GB IT NL**

(56) Entgegenhaltungen:
**EP-A- 0 078 975**
**DE-A- 1 694 248**
**FR-A- 2 328 740**
**US-A- 4 163 830**

**CHEMICAL ABSTRACT Band 87, Nr. 22, 28. November 1977, Seite 41, Spalte 1, Zusammenfassung Nr. 168960h, Columbus, Ohio, USA; & JP - A - 7777172 (M.T.P. KASEI) 29.06.1977**

(73) Patentinhaber: **Th. Goldschmidt AG**
**Goldschmidtstrasse 100 Postfach 101461**
**W-4300 Essen 1(DE)**

(72) Erfinder: **Burkhart, Georg, Dr.**
**Barkhovenallee 22**
**W-4300 Essen 16(DE)**
Erfinder: **Möhring, Volker, Dr.**
**Muhrenkamp 74**
**W-4330 Mülheim-Ruhr(DE)**
Erfinder: **Schaefer, Dietmar, Dr.**
**Milchstrasse 40**
**W-4300 Essen 14(DE)**

EP 0 301 302 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Polyurethan-und/oder Polyisocynaurat-Hartschäumen aus mindestens difunktionellen Polyisocyanaten, Verbindungen mit mindestens zwei gegenüber Isocyanaten reaktionsfähigen Wasserstoffatomen, deren Äquivalentgewicht je reaktionsfähigem Wasserstoffatom etwa 50 bis 900 beträgt, Katalysatoren, Treibmitteln und Schaumstabilisatoren, welche frei von Siliciumatomen sind, sowie gegebenenfalls üblichen Zusatzmitteln, wie Flammschutzmittel und Kettenverlängerer.

Polyurethanhartschäume werden in großer Menge nach an sich bekannten Verfahren und aus bekannten Rohstoffen hergestellt. Eine zusammenfassende Darstellung der verwendeten Rohstoffe und der anwendbaren Verfahren ist in Ullman "Enzyklopädie der technischen Chemie", 1980, Band 19, Seiten 301 bis 341, und im Kunststoff-Handbuch, Band VII, "Polyurethane" von R. Vieweg und A. Höchtlen, Carl Hanser Verlag, München, 1966, Seiten 504 bis 544, sowie in "Polyurethane" Kunststoff-Handbuch 7 von G. Oertel, Carl Hanser Verlag, München, 1983, Seiten 246 bis 331, zu finden.

Polyurethanhartschäume werden vorzugsweise zur thermischen Isolierung verwendet. Dabei können sie zu Formteilen, wie beispielsweise Platten, verschäumt werden. Es ist auch möglich, Hohlräume aller Art auszuschäumen, wobei der in dem Hohlraum befindliche Schaum häufig als konstruktives Element auch tragende Eigenschaften haben muß. Es ist weiter möglich, Polyurethanhartschäume auf flächige Träger aufzuspritzen.

Die Qualität und die Eigenschaften des gebildeten Hartschaumes hängen in besonderem Maße von der Struktur und der chemischen Zusammensetzung des verwendeten Schaumstabilisators ab.

Als Schaumstabilisatoren werden im allgemeinen Polysiloxan-Polyoxyalkylen-Blockmischpolymerisate verwendet. Diese Stabilisatoren haben hohe Wirksamkeit und lassen sich durch geeignete Auswahl der Struktur und der Zusammensetzung dem Verschäumungssystem und dem Verschäumungsverfahren anpassen. Ein Nachteil dieser siliciumorganischen Stabilisatoren ist jedoch ihr hoher Preis. Es wurde auch beobachtet, daß die Oberflächen der erhaltenen Schaumstoffe bei Verwendung siliciumorganischer Stabilisatoren schlecht benetzbar sind, wodurch nachfolgende Oberflächenschutzbehandlungen, wie etwa eine Lackierung, erschwert werden. Man hat deshalb bereits versucht, siliciumfreie Stabilisatoren zu entwickeln, die diese Nachteile nicht aufweisen.

In der DE-OS 16 94 248 wird ein Verfahren zur Herstellung von Polyurethanschaumstoffen aus Polyestern, Polyisocyanaten, Kettenverlängerungsmitteln, Aktivatoren und nicht-ionischen Schaumstabilisatoren beschrieben, welches dadurch gekennzeichnet ist, daß man als Schaumstabilisatoren Verbindungen der allgemeinen Formel

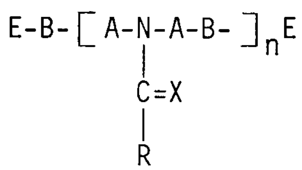

verwendet, worin R einen Alkyl-, Alkenyl-, Cycloalkyl-, Aralkyl- oder Arylrest mit 6 bis 20 C-Atomen, A einen Alkenylrest mit 2 bis 10 C-Atomen, X ein Sauerstoffatom oder 2 Wasserstoffatome bedeuten, n für eine ganze Zahl von 1 bis 30, vorzugsweise von 1 bis 10 und B für Rest der Formeln

-O-; -OOC-NH-R'-NH-COO-; -OOC-R'-COO-

steht, in denen R' einen gegebenenfalls substituierten Alkenyl- oder Arylenrest mit 2 bis 20 C-Atomen darstellt, worin ferner E für eine Gruppe der allgemeinen Formel

-D-R''

steht, in der R'' eine Hydroxylgruppe oder eine Alkoxy- oder Aryloxygruppe mit 1 bis 6 C-Atomen darstellt und D den Rest eines Polyethers aus 30 bis 100 % Ethylenoxid und 0 bis 70 % eines anderen Monoepoxids, vorzugsweise Propylenoxid, mit einem Molekulargewicht von 200 bis 10 000, vorzugsweise von 1000 bis 3000, bedeutet.

Diese dort beschriebenen Schaumstabilisatoren können dabei wegen ihrer gleichzeitigen emulgierenden und schaumstabilisierenden Wirkung allein oder im Gemisch mit bekannten Emulgatoren oder auch gleichzeitig mit Polyethersiloxanen zum Einsatz gelangen. Sie sollen dabei die Oberflächenspannung des eingesetzten Polyesters stark herabsetzen und eine feine regelmäßige Zellstruktur entstehen lassen.

In der DE-PS 22 44 350 ist ein Verfahren zur Herstellung eines Polyurethanschaums durch Umsetzung eines wenigstens 2 NCO-Gruppen aufweisenden Polyisocyanats mit einem Polyetherpolyol in Gegenwart eines Katalysators, eines Blähmittels und 0,5 bis 3 Gewichtsteilen, bezogen auf 100 Gewichtsteile, Polyetherpolyol, eines in einem Alkohol radikalisch polymerisierten, N-Vinylpyrrolidon eingebaut enthaltenden Polymeren als Zellstabilisator beschrieben, welches dadurch gekennzeichnet ist, daß man als Zellstabilisator das gesamte flüssige Produkt verwendet, das erhalten worden ist, indem man in einem flüssigen Polyetherpolyol mit 2 bis 8 Hydroxylgruppen und einem Molekulargewicht von 150 bis 6500 durch eine mit einem freien Radikal initiierte Polymerisation, gegebenenfalls in Gegenwart eines Kettenübertragungsmittels, die folgenden Monomeren zu wenigstens 30 % polymerisiert

a) 5 bis 60 Gewichtsprozent N-Vinylpyrrolidon,

b) 12,7 bis 26,5 Gewichtsprozent N-Vinylpyrrolidon und 14,5 bis 38,4 Gewichtsprozent Dibutylmaleat oder

c) 10 bis 19 Gewichtsprozent N-Vinylpyrrolidon, 20 bis 25 Gewichtsprozent Dibutylmaleat und 8 bis 16 Gewichtsprozent Vinylacetat.

In der Patentschrift wird vermutet, daß das polymerisierte Produkt der zellstabilisierende Bestandteil ist. Wird das Polymerisat jedoch vom Polyol abgetrennt, ist es weniger wirksam und erhält auch nach erneutem Auflösen in dem Polyol seine Wirksamkeit nicht zurück.

In der US-PS 3 914 188 sind ähnliche Stabilisatoren beschrieben. Das als Stabilisator wirksame Copolymerisat wird in einem Polyether mit verkappten Endgruppen durch Copolymerisation von Verbindungen der Formel

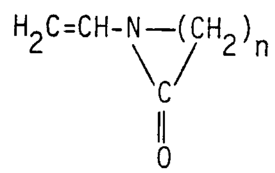

wobei n = 3, 4 oder 5 ist, und dem Ester einer ungesättigten Dicarbonsäure mit 4 oder 5 Kohlenstoffatomen hergestellt. Diese stabilisierenden Zubereitungen haben den Vorteil, daß sie gegenüber Isocyanaten weitgehend inert sind und deshalb lagerfähige Gemische dieser Stabilisatoren mit Isocyanaten hergestellt werden können.

In dem Aufsatz "Organic Surfactants for Rigid Urethane and Isocyanurate Foam" von M.J. Skowronski und M.E. Londrigan in Journal of Cellular Plastics 22, 1986, 235 ff., werden Stabilisatoren für Phenolharz-, Isocyanurat- und Urethanschäume auf organischer Basis beschrieben. Dabei erwiesen sich insbesondere Polymerisate von Fumarsäurediestern, insbesondere Fumarsäureditridecylester als brauchbar, deren Polymerisation in Ricinusöl, an welches 36 Mol Ethylenoxid angelagert waren, durchgeführt worden war und wobei das Polymerisat in dem ethoxylierten Ricinusöl belassen wurde.

Diese aus dem Stand der Technik bekannten siliciumfreien Stabilisatoren ermöglichen die Herstellung von Polyurethan-Hartschaumstoffen, deren Oberflächen besser benetzbar und überlackier- und verklebbar sind. Gleichzeitig ist das Brennverhalten der Polyurethan-Hartschaumstoffe verbessert. Sie können jedoch noch nicht alle an sie gesetzten Bedingungen erfüllen. Ein wichtiger Nachteil der siliciumfreien Stabilisatoren gegenüber den siliciumorganischen Stabilisatoren liegt in der verminderten Löslichkeit des Treibmittels auf Halogenkohlenwasserstoffbasis im Schaumsystem. Diese verminderte Löslichkeit wird insbesondere bei Verwendung von Polyesterolen beobachtet. Dies ist die Ursache für die in diesen Fällen gefundene Verschlechterung der thermischen Isolierwirkung der Schaumstoffe.

Der vorliegenden Erfindung liegt deshalb die Aufgabe zugrunde, siliciumfreie Schaumstabilisatoren zu finden, welche die Herstellung von Polyurethanschaumstoffen ermöglichen, die neben verbessertem Brennverhalten und günstigen Oberflächeneigenschaften hervorragende thermische Isolierwirkung aufweisen. Derartige Schaumstabilisatoren sollen deshalb die Löslichkeit von Halogenkohlenstofftreibgasen in dem Verschäumungsansatz erhöhen. Dabei sollen die Schaumstabilisatoren gegenüber Isocyanatgruppen dann inert sein, wenn lagerfähige Vormischungen mit den Ausgangsverbindungen der Verschäumungsreaktion erwünscht sind.

Die Lösung dieser und weiterer Aufgaben gelingt nach der vorliegenden Erfindung dadurch, daß man

als Schaumstabilisatoren Polyoxyalkylenether von Alkylphenol-Aldehyd-Kondensationsprodukten verwendet, wobei die Alkylgruppe(n) der Alkylphenole 1 bis 22 Kohlenstoffatome aufweist (aufweisen), der Aldehyd 1 bis 18 Kohlenstoffatome aufweist, das Kondensationsprodukt durchschnittlich 4 bis 18 Alkylphenolgruppen umfaßt, die Oxyalkyleneinheiten 2 bis 4 Kohlenstoffatome besitzen und der Gehalt an Oxyalkylengruppen 15 bis 85 Gew.-%, bezogen auf Gesamtgewicht, beträgt.

Vorzugsweise verwendet man Polyoxyalkylenether von Alkylphenol-Aldehyd-Kondensationsprodukten, bei denen die Alkylgruppe der Alkylphenole 8 bis 12 Kohlenstoffatome, der Aldehyd 1 bis 4 Kohlenstoffatome aufweist, das Kondensationsprodukt durchschnittlich 4 bis 10 Alkylphenolgruppen umfaßt, die Oxyalkyleneinheiten 2 oder 3 Kohlenstoffatome besitzen und der Gehalt an Oxyalkylengruppen 35 bis 65 Gew.-%, bezogen auf das Gesamtgewicht, beträgt.

Besonders bevorzugt verwendet man Polyoxyethylenether der Alkylphenol-Formaldehyd-Kondensationsprodukte.

Beispiele geeigneter Alkylphenole sind Kresol, Ethyl-, Propyl-, Butyl-, Amyl-, Phenyl-, 1-Phenylethyl-, Octyl-, Nonyl-, Dodecyl-, Tetradecyl-, Octadecyl-, Eicosanyl- oder Docosanylphenol oder Gemische hiervon, sowie rohe Alkylphenole, die herstellungsbedingt noch gewisse Mengen Dialkylphenole enthalten. Bevorzugte Alkylphenole sind Octyl-, Nonyl- und Dodecylphenol.

Beispiele geeigneter Aldehyde sind Formaldehyd, Acetaldehyd, Propionaldehyd, Glyoxal, Butyraldehyd, Glutaraldehyd, Valeraldehyd, Capronaldehyd, 2-Ethylhexanal, Benzaldehyd, Tolualdehyd, Phenylacetaldehyd, Chloral, Caprinaldehyd, Laurinaldehyd oder Octadecanal oder Gemische hiervon.

Vorzugsweise wird die Kondensation mit Formaldehyd durchgeführt.

Als Alkylenoxide kommen Ethylen-, Propylen- und Butylenoxid in Frage. Bevorzugt sind Ethylen- und Propylenoxid. Verwendet man Polyoxyalkylenether mit unterschiedlichen Oxyalkyleneinheiten, können diese blockweise oder statistisch verteilt enthalten sein.

In einer speziellen Ausführungsform des erfindungsgemäßen Verfahrens verwendet man Polyoxyalkylenether von Alkylphenol-Aldehyd-Kondensationsprodukten,bei denen die endständigen OH-Gruppen der Polyoxyalkylenreste oder ein Teil dieser OH-Gruppen durch gegenüber Isocyanatgruppen inerte Gruppen ersetzt sind. In diesem Falle verwendet man insbesondere solche Produkte, bei denen die Polyoxyalkylenreste endständig die Gruppe $-OR^1$ aufweisen und $R^1$ ein Alkylrest mit 1 bis 8 Kohlenstoffatomen, ein Carbamoyl- oder ein Acylrest ist.

Beispiele geeigneter Alkylreste $R^1$ sind die Methyl-, Ethyl-, Propyl-, Butyl-, Pentyl-, Hexyl-, Heptyl-, Octyl-, Allyl- oder Benzylgruppe.

Die Carbamolylgruppe

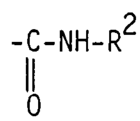

und die Acylgruppe

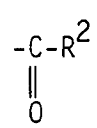

haben als Rest $R^2$ einen Kohlenwasserstoffrest mit 1 bis 8 Kohlenstoffatomen. Diese inerten Gruppen können durch Umsetzung der OH-Gruppen mit Alkylhalogeniden, wie Methyl-, Ethyl-, Propyl-, Butyl-, Allyl- oder Benzylhalogeniden, durch Umsetzung mit olefinischen Verbindungen, wie Isobuten oder Alkylvinylether, durch Umsetzung mit organischen Isocyanaten, wie Methyl-, Ethyl-, Butyl- oder Phenylisocyanat oder mit Carbonsäuren oder deren Derivaten, wie Essigsäure, Acetanhydrid, Acetylchlorid, Essigsäurealkylester, Benzoesäure oder Benzoylchlorid hergestellt werden.

Durch die geeignete Wahl der inerten Gruppe ist es möglich, Produkte zu erhalten, welche im Polyisocyanat lagerfähig sind. Ist es jedoch erwünscht, die Stabilisatoren dem Verschäumungspolyol zuzumischen, sind diejenigen Produkte bevorzugt, bei denen mindestens die Hälfte der Reste $R^1$ Wasserstoffreste sind. Mit steigendem Gehalt an Hydroxylgruppen nimmt die Löslichkeit der Verbindungen in den Verschäumungspolyolen zu, wodurch ihre Mischbarkeit und Dosierbarkeit verbessert werden.

Die für das erfindungsgemäße Verfahren ausgewählten Alkylphenolharze sind an sich bekannte Verbindungen und können in ebenfalls an sich bekannter Weise analog zu den entsprechenden unsubstituierten Phenolharzen durch Kondensation von Phenol- und Aldehydkomponente unter saurer oder basischer Katalyse hergestellt werden. Eine zusammenfassende Darstellung der anwendbaren Verfahren findet sich beispielsweise in "Ullmanns Enzyklopädie der technischen Chemie", 4. Auflage, 1979, Bd. 18, S. 245 bis 257, Verlag Chemie, Weinheim; "Encyclopedia of Polymer Science and Technology", Vol. 10, 1969, S. 1 bis 73, Interscience Publishers, New York; "Methoden der organischen Chemie (Houben-Weyl)", Bd. 14/2, 1963, S. 193 bis 292, Verlag Georg Thieme, Stuttgart.

Die beim erfindungsgemäßen Verfahren verwendeten Alkylphenolharze werden vorzugsweise unter saurer Katalyse hergestellt. Die anschließende Oxyalkylierung der Alkylphenolharze wird nach ebenfalls bekannten Verfahren, bevorzugt in Gegenwart von basischen Katalysatoren, durchgeführt.

In der DE-OS 26 47 390 ist ein Verfahren zur Herstellung von geschäumten Phenolharzen einer Dichte zwischen 0,03 und 0,40 aus einem Gemisch, das mindestens ein Phenolharz vom Resoltyp, ein Treibmittel, ein grenzflächenaktives Mittel und ein saures Härtungsmittel enthält, beschrieben, welches dadurch gekennzeichnet ist, daß man als grenzflächenaktives Mittel ein Novolak mit mindestens 5 Alkylphenolkernen, deren Alkylreste 8 bis 12 Kohlenstoffatome aufweisen und die Alkylenoxidketten tragen, welche aus Ethylenoxid- und Propylenoxideinheiten im Verhältnis von mindestens 10 Molekülen Alkylenoxid pro Alkylphenolkern aufgebaut sind, verwendet und dieses grenzflächenaktive Mittel in einer Menge von 0,5 bis 5 %, bezogen auf das eingesetzte Phenolharz, anwendet. Hieraus konnte der Fachmann eine Verwendbarkeit dieser Produkte zur Stabilisierung von Polyurethanschäumen nicht herleiten, da die Wirkung der Stabilisatoren substratspezifisch ist.

Die beim erfindungsgemäßen Verfahren zu verwendenden Stabilisatoren werden in üblichen Mengen, d.h. in Mengen von etwa 0,2 bis 5 Gew.-%, bezogen auf Polyol, verwendet.

Es ist selbstverständlich möglich, zusätzlich zu den beim erfindungsgemäßen Verfahren zu verwendenden Stabilisatoren weitere Stabilisatoren mit gegebenenfalls anderer Struktur oder zusätzlich andere Zusatzmittel einzusetzen.

Als Polyisocyanate und als Verbindungen mit gegenüber Isocyanaten reaktionsfähigen Wasserstoffatomen können die üblichen, hierfür aus dem Stand der Technik bekannten Verbindungen eingesetzt werden. Geeignete Polyisocyanate umfassen die bekannten aliphatischen, cycloaliphatischen, araliphatischen sowie aromatischen Di- oder Polyisocyanate. Die bevorzugten Polyisocyanate sind 2,4- und 2,6-Toluoldiisocyanat, Diphenylmethandiisocyanat, Polymethylenpolyphenylisocyanat und Mischungen davon. Auch beliebige der anderen in üblicher Weise verwendeten Polyisocyanate, wie Hexamethylendiisocyanat, Chlorphenyldiisocyanat, Bromphenyldiisocyanat, Tetraisocyanatodiphenylmethan oder dergleichen, können verwendet werden.

Unter Verbindungen mit mindestens zwei gegenüber Isocyanatgruppen reaktionsfähigen Wasserstoffatomen versteht man Hydroxylgruppen und/oder Aminogruppen und/oder Thiolgruppen und/oder Carboxylgruppen aufweisende Verbindungen, vorzugsweise aber Hydroxyl- und/oder Aminogruppen aufweisende Verbindungen. Diese Verbindungen haben in der Regel 2 bis 8, vorzugsweise 2 bis 4, gegenüber Isocyanaten reaktionsfähige Wasserstoffatome. Beispiele solcher Verbindungen sind dem Verschäumungsfachmann geläufig und können z.B. der DE-OS 28 32 253 entnommen werden.

Man erhält nach dem erfindungsgemäßen Verfahren Polyurethan- und/oder Polyisocyanurat-Hartschäume, welche die gewünschte Eigenschaftskombination aufweisen: verringerte Brennbarkeit, verbesserte Lackierbarkeit und Verklebbarkeit der Schaumoberfläche, hohe thermische Isolierwirkung und günstiges Preiswirkungsverhältnis der Schaumstabilisatoren.

In den folgenden Beispielen werden die (nicht erfindungsgemäße) Herstellung der Stabilisatoren, ihre Verwendung bei der Herstellung von Polyurethanschäumen und die anwendungstechnischen Eigenschaften der erhaltenen Schaumstoffe noch näher erläutert.

Beispiel 1

Herstellung eines Schaumstabilisators (nicht beansprucht)

In einem 3-Halskolben, der mit Rührer, Tropftrichter und Wasserabscheider versehen worden ist, werden 30 g (1 Mol) Paraformaldehyd in 100 ml Toluol vorgelegt und auf 80 °C erhitzt. Innerhalb von 30 Minuten wird bei ca. 90 °C eine Mischung aus 220 g (1 Mol) Nonylphenol, 50 ml Toluol sowie 5,1 g Dodecylbenzolsulfonsäure zudosiert. Das Reaktionswasser wird azeotrop abdestilliert, dann erfolgt bei einer Temperatur von 120 °C eine Nachreaktion für weitere 30 Minuten. Nach Zugabe von 5,2 g Kaliumhydroxid wird das Reaktionswasser azeotrop entfernt.

Zur Bestimmung des Alkylphenolharzgehaltes der Lösung (Gew.-%) wird eine Probe entnommen und

bei dieser unter vermindertem Druck das Lösungsmittel abdestilliert.

Die alkalische Alkylphenolharz/Toluol-Lösung wird in einen Reaktor mit Umlaufsystem überführt.

Nach Spülung mit Stickstoff wird auf 110 °C geheizt. Dann werden im Verlauf einer Stunde 235 g (5,3 Mol) Ethylenoxid so zugegeben, daß die Temperatur 120 °C und der Druck 10 bar nicht überschreiten. Schließlich erfolgt bei 120 °C eine Nachreaktion bis zur Druckkonstanz (ca. 4 Stunden).

Danach wird mit Phosphorsäure neutralisiert, Wasser und Lösungsmittel abdestilliert und das entstandene Salz durch Filtration entfernt.

Das Produkt mit ca. 50 Gew.-% Oxyalkylenanteil besitzt ein gelchromatographisch bestimmtes häufigstes Molekulargewicht von ca. 5000.

Die in den folgenden Beispielen aufgeführten Schaumstabilisatoren werden nach dem gleichen Verfahren wie soeben beschrieben hergestellt und unterscheiden sich wie folgt:

| | |
|---|---|
| Schaumstabilisator A: | Produkt wie oben beschrieben. |
| B: | Es werden 100 g (2,3 Mol) Ethylenoxid zugegeben, so daß ein Produkt mit ca. 30 Gew.-% Oxyalkylenanteil gebildet wird (häufigstes Molekulargewicht: ca. 4000). |
| C: | Es werden 548 g (12,5 Mol) Ethylenoxid zugegeben, so daß ein Produkt mit ca. 70 Gew.-% Oxyalkylenanteil gebildet wird (häufigstes Molekulargewicht: ca. 6000). |
| D: | Es wird eine Mischung aus 262 g (1 Mol) Dodecylphenol, 50 ml Toluol sowie 5,1 g Dodecylbenzolsulfonat zur Paraformaldehyd-Lösung dosiert. |
| E: | Es werden 44 g (1 Mol) Paraldehyd in 100 ml Toluol vorgelegt. |
| F: | Es werden zunächst 90 g (1,5 Mol) Propylenoxid und nach dessen Verbrauch 260 g (5,9 Mol) Ethylenoxid zugegeben, so daß ein Produkt mit ca. 60 Gew.-% Oxyalkylenanteil gebildet wird. |
| G: | Es werden zunächst 73 g (1 Mol) Butylenoxid und nach dessen Verbrauch 360 g (8,2 Mol) Ethylenoxid zugegeben, so daß ein Produkt mit ca. 65 Gew.-% Oxyalkylenanteil gebildet wird. |
| H: | Das Produkt nach Beispiel 1 wird anschließend mit einer zu den OH-Gruppen äquimolaren Menge Phenylisocyanat umgesetzt. |
| I: | Das Produkt nach Beispiel 1 wird anschließend mit einer zu den OH-Gruppen äquimolaren Menge Butylisocyanat umgesetzt. |

Zum Vergleich dienen zwei siliciumfreie Schaumstabilisatoren.

Vergleichsprodukt 1:

Ein Polymerprodukt, enthaltend ein Copolymer aus N-Vinylpyrrolidon und Dibutylmaleat, polymerisiert in einem trifunktionellen Polyol, beschrieben im US-Patent 3 746 663.

Vergleichsprodukt 2:

Ein Polymerisat aus Fumarsäureditridecylester, polymerisiert in ethoxyliertem Ricinusöl, beschrieben im US-Patent 4 529 745.

Beispiele 2 bis 12

Herstellung von PU-Schäumen (erfindungsgemäß)

Nach der folgenden Rezeptur, die geeignet ist für die kontinuierliche Produktion von PU-Hartschaumplatten auf Doppelbandanlagen (CLBS), werden im Handschaumverfahren PU-Hartschaumstoffe hergestellt (Angaben in Gewichtsteilen):

| | |
|---|---|
| 70 | Teile Polyesterpolyol, OHZ = 350 |
| 30 | Teile Amin-Polyetherpolyol, OHZ = 530 |
| 10 | Teile Flammschutzmittel Tris-2-chlorpropylphosphat |
| 0,5 | Teile $H_2O$ |
| 1,0 | Teile N,N-Dimethylcyclohexylamin |
| 2,0 | Teile Trimethyl-2-hydroxypropylammoniumformiat |
| 0,75 | Teile Schaumstabilisator |
| 35,0 | Teile Trichlorfluormethan |
| 262,7 | Teile rohes Diphenylmethan-diisocyanat, MDI (Index 250) |

Alle Komponenten, außer dem Diisocyanat, werden 30 Sekunden mit 1000 Upm bei 23 °C gerührt, dann das Diisocyanat zugegeben und weitere 7 Sekunden bei 2500 Upm gerührt. Die Mischung wird innerhalb von 5 Sekunden in eine Holzform mit einem Hohlraum 40 x 40 x 5 cm gegossen (Überfüllungsgrad: ca. 5 %) und diese sofort verschlossen. Zur Auskleidung der Form dient Aluminiumpapier. Vor der Entnahme läßt man den Schaum ungefähr 20 Minuten in der unbeheizten Form aushärten. Das Raumgewicht der nach diesem Verfahren erhaltenen Schäume liegt bei ca. 45 $kg/m^3$ (ohne Außenhaut).

Die für die jeweiligen physikalischen Messungen benötigten Probekörper (ohne Außenhaut) werden mit einer Schaumsäge aus dem Formschaumkörper geschnitten. Die physikalischen Messungen werden bei 23 °C und 50 Prozent relative Luftfeuchtigkeit durchgeführt. Die in Tabelle 1 aufgeführten Werte werden nach folgenden Methoden erhalten:

a) Bestimmung der Brennbarkeit entsprechend der "lowest oxygen index"-Methode (LOI) nach ASTM D 2863/70. Je höher der LOI-Wert ist, desto geringer ist die Brennbarkeit des Schaumes.

b) Bestimmung der Wärmeleitzahl λ nach DIN 52612 (Anacon-Meßgerät Modell 88, Probekörpergröße: 20 x 20 x 2,5 cm).

c) Bestimmung der Geschlossenzelligkeit mit dem Luftvergleichspyknometer Modell 930 von Beckmann nach der Beckmann-Methode (Probekörperdurchmesser: 3,4 cm, Höhe 4 cm).

Die anwendungstechnischen Eigenschaften der erhaltenen Schäume in Abhängigkeit vom verwendeten Stabilisator können der Tabelle 1 entnommen werden.

Tabelle 1

| Beispiel | Schaumstabilisator | Zellstruktur | LOI-Wert | λ [W/m.K] | Geschl. Zellen [%] |
|---|---|---|---|---|---|
| 2 | A | sehr fein bis fein | 23,3 | 0,0204 | 92,5 |
| 3 | B | sehr fein | 23,2 | 0,0201 | 94,3 |
| 4 | C | sehr fein | 23,2 | 0,0203 | 93,6 |
| 5 | D | sehr fein | 23,1 | 0,0204 | 92,7 |
| 6 | E | sehr fein bis fein | 23,3 | 0,0208 | 91,8 |
| 7 | F | sehr fein bis fein | 23,1 | 0,0202 | 93,7 |
| 8 | G | sehr fein bis fein | 23,0 | 0,0202 | 94,1 |
| 9 | H | sehr fein bis fein | 23,2 | 0,0211 | 90,9 |
| 10 | I | sehr fein bis fein | 23,1 | 0,0203 | 93,4 |
| 11 | Vergleich 1 | sehr fein bis fein | 23,0 | 0,0212 | 90,8 |
| 12 | Vergleich 2 | sehr fein bis fein | 23,0 | 0,0211 | 91,3 |

Die nach dem erfindungsgemäßen Verfahren hergestellten Schäume zeigen eine ausgezeichnete Zellstruktur bei einem sehr hohen Anteil geschlossener Zellen, haben ein günstiges Brennverhalten und eine hervorragende thermische Isolierwirkung (niedrige Wärmeleitzahl).

Beispiele 13 bis 23

Löslichkeit der Schaumkomponenten

In diesen Beispielen wird die Auswirkung der unterschiedlichen, in den Beispielen 2 bis 12 verwendeten Schaumstabilisatoren auf die Löslichkeit der einzelnen Komponenten, besonders des Halogenkohlenstofftreibmittels, im Verschäumungsansatz demonstriert.

Sämtliche in der oben aufgeführten Rezeptur beschriebenen Komponenten, außer dem Treibmittel und der Isocyanatkomponente, werden in den angegebenen Gewichtsteilen vorgemischt. Nach Überführen dieser Mischung in eine Glasflasche werden 30 Gewichtsteile Trichlorfluormethan zugegeben, die Flasche sorgfältig verschlossen und der Inhalt intensiv durch Schütteln vermischt. Nach dem Aufsteigen der Gasblasen wird die Homogenität der Mischung visuell beurteilt; die Ergebnisse können der Tabelle 2

entnommen werden (Zuordnung der Schaumbstabilisatoren: siehe Beispiel 1).

Tabelle 2

| Beispiel | Schaumstabilisator | Aussehen der Mischung |
|---|---|---|
| 13 | A | klar |
| 14 | B | klar |
| 15 | C | klar |
| 16 | D | klar |
| 17 | E | klar |
| 18 | F | klar |
| 19 | G | klar |
| 20 | H | fast klar |
| 21 | I | fast klar |
| 22 | Vergleich 1 | stark trübe |
| 23 | Vergleich 2 | stark trübe |

**Patentansprüche**

1. Verfahren zur Herstellung von Polyurethan- und/oder Polyisocyanurat-Hartschäumen aus mindestens difunktionellen Polyisocyanaten, Verbindungen mit mindestens zwei gegenüber Isocyanaten reaktionsfähigen Wasserstoffatomen, deren Äquivalentgewicht je reaktionsfähigem Wasserstoffatom etwa 50 bis 900 beträgt, Katalysatoren, Treibmitteln und Schaumstabilisatoren, welche frei von Siliciumatomen sind, sowie gegebenenfalls üblichen Zusatzmitteln, wie Flammschutzmittel und Kettenverlängerer, dadurch gekennzeichnet, daß man als Schaumstabilisatoren Polyoxyalkylenether von Alkylphenol-Aldehyd-Kondensationsprodukten verwendet, wobei die Alkylgruppe(n) der Alkylphenole 1 bis 22 Kohlenstoffatome aufweist (aufweisen), der Aldehyd 1 bis 18 Kohlenstoffatome aufweist, das Kondensationsprodukt durchschnittlich 4 bis 18 Alkylphenolgruppen umfaßt, die Oxyalkyleneinheiten 2 bis 4 Kohlenstoffatome besitzen und der Gehalt an Oxyalkylengruppen 15 bis 85 Gew.-%, bezogen auf Gesamtgewicht, beträgt.

2. Verfahren nach Anspruch 1, dadurch gekennzeichnet, daß man Polyoxyalkylenether von Alkylphenol-Aldehyd-Kondensationsprodukten verwendet, bei denen die endständigen OH-Gruppen der Polyoxyalkylenreste oder ein Teil dieser OH-Gruppen durch gegenüber Isocyanatgruppen inerte Gruppen ersetzt sind.

3. Verfahren nach Anspruch 2, dadurch gekennzeichnet, daß man Polyoxyalkylenether von Alkylphenol-Aldehyd-Kondensationsprodukten verwendet, bei denen die Polyoxyalkylenreste endständig die Gruppe $OR^1$ aufweisen und $R^1$ ein Alkylrest mit 1 bis 8 Kohlenstoffatomen, ein Carbamoyl- oder ein Acylrest ist.

4. Verfahren nach einem oder mehreren der vorhergehenden Ansprüche, dadurch gekennzeichnet, daß man Polyoxyalkylenether von Alkylphenol-Aldehyd-Kondensationsprodukten verwendet, bei denen die Alkylgruppe der Alkylphenole 8 bis 12 Kohlenstoffatome, der Aldehyd 1 bis 4 Kohlenstoffatome aufweist, das Kondensationsprodukt durchschnittlich 4 bis 10 Alkylphenolgruppen umfaßt, die Oxyalkyleneinheiten 2 oder 3 Kohlenstoffatome besitzen und der Gehalt an Oxyalkylengruppen 35 bis 65 Gew.-

%, bezogen auf das Gesamtgewicht, beträgt.

5. Verfahren nach einem oder mehreren der vorhergehenden Ansprüche, dadurch gekennzeichnet, daß man Polyoxyethylenether der Alkylphenol-Formaldehyd-Kondensationsprodukte verwendet.

**Claims**

1. Process for the production of rigid polyurethane and/or polyisocyanurate foams from at least difunctional polyisocyanates, compounds containing at least two hydrogen atoms which are reactive towards isocyanates and whose equivalent weight is from about 50 to 900 per reactive hydrogen atom, catalysts, blowing agents and foam stabilisers which contain no silicon atoms, and optionally conventional additives, such as flameproofing agents and chain extenders, characterised in that the foam stabilisers used are polyoryalkylene ethers of alkylphenol-aldehyde condensation products, where the alkyl group(s) of the alkylphenols has (have) 1 to 22 carbon atoms and that (those) of the aldehyde has (have) from 1 to 18 carbon atoms, the condensation product contains on average from 4 to 18 alkylphenol groups, the oxyalkylene units have from 2 to 4 carbon atoms, and the oxyalkylene group content is from 15 to 85% by weight, based on the total weight.

2. Process according to Claim 1, characterised in that the polyoxyalkylene ethers of alkylphenol-aldehyde condensation products are those in which the terminal OH groups of the polyoxyalkylene radicals or some of these OH groups have been replaced by groups which are inert towards isocyanate groups.

3. Process according to Claim 2, characterised in that the polyoxyalkylene ethers of alkylphenol-aldehyde condensation products are those in which the polyoxyalkylene radicals contain a terminal group $OR^1$, and $R^1$ is an alkyl radical having 1 to 8 carbon atoms, a carbamoyl radical or an acyl radical.

4. Process according to one or more of the preceding claims, characterised in that the polyoxyalkylene ethers of alkylphenol-aldehyde condensation products are those in which the alkyl group of the alkylphenols has from 8 to 12 carbon atoms, that of the aldehyde has from 1 to 4 carbon atoms, the condensation product contains on average 4 to 10 alkylphenol groups, the oxyalkylene units have 2 or 3 carbon atoms, and the oxyalkylene group content is from 35 to 65% by weight, based on the total weight.

5. Process according to one or more of the preceding claims, characterised in that polyoxyethylene ethers of alkylphenol-formaldehyde condensation products are used.

**Revendications**

1. Procédé de préparation de mousses dures de polyuréthannes et/ou de polyisocyanurates à base de polyisocyanates au moins bifonctionnels, de composés contenant au moins deux atomes d'hydrogène aptes à réagir avec les isocyanates, dont le poids d'équivalent est d'environ 50 à 900 par atome d'hydrogène apte a réagir, de catalyseurs, de produits moussants et de stabilisateurs de mousse qui sont exempts d'atomes de silicium, ainsi qu'éventuellement d'additifs usuels, comme des agents ignifuges et des allongeurs de chaîne, caractérisé en ce qu'on utilise, comme stabilisateurs de mousse, des éthers de polyoxyalcoylène de produits de condensation d'alcoylphénols et d'un aldéhyde, où le/les groupe(s) alcoyle des alcoylphénols comporte(nt) 1 à 22 atomes de carbone, l'aldéhyde comporte 1 à 18 atomes de carbone, le produit de condensation comprend en moyenne 4 à 18 groupes alcoylphénols, les unités oxyalcoylène possèdent 2 à 4 atomes de carbone et la teneur en groupe oxyalcoylène est de 15 à 85 %, par rapport au poids total.

2. Procédé selon la revendication 1, caractérisé en ce qu'on utilise des éthers de polyoxyalcoylène de produits de condensation d'alcoylphénols et d'un aldéhyde, où les groupes terminaux OH des restes polyoxyalcoylène ou une partie de ces groupes OH sont remplacés par des groupes inertes vis-à-vis des groupes isocyanates.

3. Procédé selon la revendication 2, caractérisé en ce qu'on utilise des éthers de polyoxyalcoylène de produits de condensation d'alcoylphénols et d'un aldéhyde, où les restes polyoxyalcoylène comportent le groupe $OR^1$ en fin de chaîne, et $R^1$ est un reste alcoyle comportant 1 à 8 atomes de carbone, un

reste carbamoyle ou un reste acyle.

4. Procédé selon une ou plusieurs des revendications précédentes, caractérisé en ce qu'on utilise des éthers de polyoxyalcoylène de produits de condensation d'alcoylphénols et d'un aldéhyde, où le groupe alcoyle des alcoylphénols comporte 8 à 12 atomes de carbone, l'aldéhyde comporte 1 à 4 atomes de carbone, le produit de condensation comprend en moyenne 4 à 10 groupes alcoylphénols, les unités oxyalcoylène possèdent 2 ou 3 atomes de carbone, et la teneur en groupe oxyalcoylène est de 35 à 65 %, par rapport au poids total.

5. Procédé selon une ou plusieurs des revendications précédentes, caractérisé en ce qu'on utilise des éthers de polyoxyéthylène des produits de condensation d'un alcoylphénols et d'un formaldéhyde.